# EUROPÄISCHE PATENTANMELDUNG

(11) **EP 3 431 333 A1**
(43) Veröffentlichungstag der Anmeldung: **23.01.2019**
(21) Anmeldenummer: 18182410.3
(22) Anmeldetag: 09.07.2018
(51) Int. Cl.: B60N 2/30, B60P 3/36

(54) **FAHRZEUGBEHELFSSITZ FÜR EIN KRAFTFAHRZEUG**

(30) Priorität: 17.07.2017 DE 102017116034
(71) Anmelder: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(57) **Zusammenfassung**

Fahrzeugbehelfssitz für ein Kraftfahrzeug, wobei der Fahrzeugbehelfssitz eine Sitzfläche aufweist, wobei der Fahrzeugbehelfssitz Montageelemente aufweist, um den Fahrzeugbehelfssitz an eine Sitzunterkonstruktion anbringen zu können, wobei die Sitzunterkonstruktion zur Anbringung eines herkömmlichen Fahrersitzes des Kraftfahrzeugs vorgesehen ist, und wobei der Fahrzeugbehelfssitz für eine auswechselbare Anbringung an die Sitzunterkonstruktion ausgebildet ist.

## Beschreibung

### Stand der Technik

Ein Fahrzeugchassis für Nutzfahrzeuge, insbesondere für Wohnmobile, wird herkömmlicherweise vom Kraftfahrzeughersteller mit einem Motor und Rädern und ohne weitere Aufbauten wie z.B. Führerhaus, Ladefläche oder Wohnraumaufbau an Hersteller der Nutzfahrzeuge ausgeliefert. Aus diesem Grund ist das Fahrzeugchassis nur durch zusätzliche Antriebsmittel, wie z.B. einen Förderwagen oder ein Förderband bewegbar.

### Aufgabe und Vorteile der Erfindung

Aufgabe der vorliegenden Erfindung ist es, das Fahrzeugchassis durch eine Person ohne ein zusätzliches Antriebsmittel fahrbar auszubilden.

Diese Aufgabe wird durch die Merkmale des Anspruchs 1 gelöst.

In den abhängigen Ansprüchen sind vorteilhafte und zweckmäßige Ausführungsformen der Erfindung genannt.

Kern der Erfindung ist ein Fahrzeugbehelfssitz für ein Kraftfahrzeug, wobei der Fahrzeugbehelfssitz eine Sitzfläche aufweist, wobei der Fahrzeugbehelfssitz Montageelemente aufweist, um den Fahrzeugbehelfssitz an einer Sitzunterkonstruktion anbringen zu können, wobei die Sitzunterkonstruktion zur Anbringung eines herkömmlichen Fahrersitzes des Kraftfahrzeugs vorgesehen ist, und wobei der Fahrzeugbehelfssitz für eine auswechselbare Anbringung an die Sitzunterkonstruktion ausgebildet ist. Hierdurch ist ein Fahrzeugbehelfssitz bzw. Notsitz zur Nutzung, insbesondere zur Verbringung des Fahrzeugs im Rohzustand, z.B. als Fahrzeugchassis ohne weitere Aufbauten, realisiert.

Das Kraftfahrzeug ist vorteilhafterweise als ein Fahrzeugchassis eines Nutzfahrzeugs, z.B. eines Lastkraftwagens oder eines Wohnmobils vorhanden. Das Fahrzeugchassis umfasst dabei einen Fahrzeugrahmen, an welchem eine Antriebseinheit und Räder vorhanden sind. Das Fahrzeugchassis ist durch Aufbauten z.B. in Richtung eines Lastkraftwagens oder eines Wohnmobils erweiterbar. Sonstige Fahrzeugaufbauten, wie z.B. Karosserie oder auch Fahrzeugsitze, welche das fertige Kraftfahrzeug definieren, sind am Fahrzeugchassis im Rohzustand beispielsweise nicht vorhanden.

Die Sitzunterkonstruktion ist vorteilhafterweise fest mit dem Fahrzeugchassis, z.B. dem Fahrzeugrahmen des Fahrzeugs verbunden. Die Sitzunterkonstruktion ist beispielsweise derart ausgebildet, dass ein Sitz in einer erhöhten Position, in vertikaler Richtung beabstandet vom Fahrzeugboden, an der Sitzunterkonstruktion anbringbar ist. Vorteilhafterweise ist der Fahrzeugbehelfssitz für die Anbringung an ein Fahrzeug, z.B. ein Fahrzeugchassis, für eine Verbringung des Fahrzeugs innerhalb eines innerbetrieblichen Werksverkehrs ausgebildet. Der Fahrzeugbehelfssitz ist bevorzugterweise zur Anbringung an die Sitzunterkonstruktion eines Fahrersitzes an Stelle des herkömmlichen Fahrersitzes ausgebildet.

In einer vorteilhafte Variante des Fahrzeugbehelfssitzes sind die Montageelemente für eine lösbare Befestigung des Fahrzeugbehelfssitzes an der Sitzunterkonstruktion ausgebildet, wobei die Montageelemente ein Montageorgan zum Einhängen des Fahrzeugbehelfssitzes an die Sitzunterkonstruktion umfassen. Dadurch ist der Fahrzeugbehelfssitz vergleichsweise einfach und schnell an die Sitzunterkonstruktion anbringbar.

Das Montageorgan ist beispielsweise hakenartig und/oder klammerartig ausgebildet. Beispielsweise ist das Montageorgan in einem Querschnitt L- oder U-förmig vorhanden. Beispielsweise sind mindestens zwei, insbesondere drei oder vier Montageorgane am Fahrzeugbehelfssitz ausgebildet. Vorteilhafterweise sind zwei Montageorgane in einer Richtung senkrecht zur Fahrtrichtung des Fahrzeugbehelfssitz beabstandet voneinander am Fahrzeugbehelfssitz angeordnet.

Bevorzugterweise ist der Fahrzeugbehelfssitz durch eine Schwenkbewegung nach vorne unten an die Sitzunterkonstruktion anhängbar bzw. einhängbar, wobei vorne in Sitzrichtung bzw. in Fahrtrichtung zu sehen ist. Denkbar ist auch, dass die Montageorgane derart vorhanden sind, dass der Fahrzeugbehelfssitz durch eine Schwenkbewegung nach hinten unten an die Sitzunterkonstruktion anhängbar bzw. einhängbar ist. Vorteilhafterweise ist der Fahrzeugbehelfssitz durch eine Bewegung von oben an die Sitzunterkonstruktion anbringbar, z.B. anhängbar, einhängbar oder anklemmbar bzw. anklipsbar. Denkbar ist auch, dass der Fahrzeugbehelfssitz aufliegend auf der Sitzunterkonstruktion an der Sitzunterkonstruktion befestigbar ist.

Außerdem erweist es sich von Vorteil, dass zumindest ein Montageorgan unterhalb der Sitzfläche in einem hinteren Bereich des Fahrzeugbehelfssitzes an einem Rahmen des Fahrzeugbehelfssitzes vorhanden ist und derart an die Sitzunterkonstruktion anbringbar ausgebildet ist, dass der Fahrzeugbehelfssitz im angehängten Zustand an der Sitzunterkonstruktion im hinteren Bereich des Fahrzeugbehelfssitz gegen ein Abheben nach oben im Crashfall gehalten ist.

Ein Montageorgan, insbesondere zwei Montageorgane sind vorteilhafterweise in einem hinteren Bereich des Fahrzeugbehelfssitzes ausgebildet, insbesondere unterhalb der Sitzfläche des Fahrzeugbehelfssitzes. Bevorzugterweise umgreift bzw. untergreift das Montageorgan im angeordneten Zustand an der Sitzunterkonstruktion diese, sodass der Fahrzeugbehelfssitz gegen ein Abheben nach oben, insbesondere im Crashfall, an der Sitzunterkonstruktion gehalten ist. Beispielsweise umgreift bzw. untergreift das Montageorgan eine zur Fahrtrichtung bzw. Sitzrichtung quer verlaufende Querstrebe der Sitzunterkonstruktion. Beispielsweise umgreift bzw. untergreift ein Montageorgan die Sitzunterkonstruktion in einem vorderen Bereich und ein weiteres Montageorgan die Sitzunterkonstruktion in einem hinteren Bereich, wobei die beiden Montageorgan vorteilhafterweise in Sitzrichtung bzw. in Fahrtrichtung gesehen voneinander beabstandet am Fahrzeugbehelfssitz angeordnet sind.

Vorstellbar ist ebenfalls, dass ein Montageelement, insbesondere ein Montageorgan strebenartig vorhanden ist. Beispielsweise ist ein Montageelement und/oder ein Montageorgan aus einem Blech bzw. einer Metallplatte, welche insbesondere mehrfach umgebogen ist, ausgebildet. Zum Beispiel ist das strebenartige Montageelement und/oder das strebenartige Montageorgan ähnlich einem C-Profil geformt. Ist das Montageorgan strebenartig ausgebildet, so erstreckt sich das Montageorgan am Fahrzeugbehelfssitz in einer Richtung senkrecht zur Sitzrichtung bzw. senkrecht zur Fahrtrichtung, insbesondere parallel zur Sitzfläche am Fahrzeugbehelfssitz. Beispielsweise ist ein Montageorgan an einem strebenartigen Montageelement befestigt.

Bevorzugterweise umfasst der Fahrzeugbehelfssitz neben der Sitzfläche einen Rahmen und/oder eine Rückenlehne. Dadurch ist der Behelfssitz vergleichsweise kostengünstig, leicht und robust ausgebildet. Weiter wird vorgeschlagen, dass am Fahrzeugbehelfssitz eine Rückenlehne vorhanden ist und die Sitzfläche und die Rückenlehne zueinander positionsfest vorhanden sind. Z.B. sind die Rückenlehne und die Sitzfläche am Rahmen zueinander positionsfest und unlösbar befestigt sind.

Der Rahmen ist beispielsweise aus einem gebogenen Rohr oder einer Strebe ausgestaltet. Der Rahmen ist vorteilhafterweise einstückig ausgebildet. Insbesondere ist der Rahmen aus einem einzigen gebogenen Metallrohr, z.B. Stahlrohr oder einer einzigen gebogenen Metallstrebe, z.B. Stahlstrebe ausgebildet. Das Rohr verläuft beispielsweise U-förmig unterhalb der Sitzfläche, wobei es in einem vorderen Bereich der Sitzfläche quer zur Sitzrichtung verlaufend vorhanden ist.

Die Sitzfläche und/oder die Rückenlehne ist z.B. an den Rahmen angeschraubt und/oder angenietet. Beispielsweise ist die Sitzfläche und/oder die Rückenlehne mit dem Rahmen verschweißt. Die Rückenlehne ist beispielsweise auf Enden des Stahlrohrs aufgesteckt oder aufgeschoben.

Vorteilhafterweise sind die Montageelemente, insbesondere das Montageorgane am Rahmen befestigt, insbesondere unlösbar angeordnet, z.B. geschweißt und/oder genietet. Denkbar ist auch, dass die Montageelemente und/oder das Montageorgan Teil des Rahmens ist.

Eine vorteilhafte Modifikation des Fahrzeugbehelfssitzes ist, dass die Montageelemente Schnellverschlussmittel umfassen, wobei die Schnellverschlussmittel dazu ausgebildet sind, den an der Sitzunterkonstruktion angeordneten Fahrzeugbehelfssitz lösbar zu sichern. Hierdurch ist eine Sicherung des Fahrzeugbehelfssitzes an der Sitzunterkonstruktion vergleichsweise leicht und schnell einrichtbar.

Ein Schnellverschlussmittel ist beispielsweise als ein Schnellspanner vorhanden. Denkbar ist auch, dass ein Schnellverschlussmittel Bajonettverschluss-artig ausgebildet ist. Vorstellbar ist auch, dass die Schnellverschlussmittel Flügelschrauben oder Flügelmuttern umfassen.

Außerdem erweist es sich von Vorteil, dass der Fahrzeugbehelfssitz L-förmig ausgebildet ist. Beispielsweise umfasst der Fahrzeugbehelfssitz eine Sitzfläche und eine Rückenlehne. Vorteilhafterweise ist die Sitzfläche und/oder die Rückenlehen vergleichsweise leicht ausgebildet, z.B. als einfaches Brett. Denkbar ist auch, dass die Sitzfläche und/oder die Rückenlehne aus Stoff bestehen, z.B. tuchartig am Rahmen des Fahrzeugbehelfssitzes, ähnlich eines Campingstuhls, aufgespannt vorhanden sind.

Weiter ist es bevorzugt, dass der Fahrzeugbehelfssitz stapelbar ausgebildet ist. Hierdurch ist der Fahrzeugbehelfssitz vergleichsweise leicht verstaubar. Denkbar ist, dass der Fahrzeugbehelfssitz in Form einer insbesondere stapelbaren Sitzschale ausgebildet.

In einer vorteilhaften Modifikation der Erfindung weist der Fahrzeugbehelfssitz ein Gurt-Rückhaltesystem zur Sicherung eines Nutzers auf. Hierdurch ist die Sicherheit des Nutzers verbessert. Das Gurt-Rückhaltesystem umfasst vorteilhafterweise einen Gurt. Beispielsweise ist das Rückhaltesystem als ein Drei-Punkt-Gurt-Sicherheitssystem ausgebildet. Beispielsweise ist der Fahrzeugbehelfssitz als vollwertiger Sitz mit Gurt-Sicherheitssystem ausgebildet.

Das Gurt-Rückhaltesystem ist vorteilhafterweise am Fahrzeugbehelfssitz beispielsweise ausschließlich am Fahrzeugbehelfssitz, insbesondere am Rahmen des Fahrzeugbehelfssitzes, befestigt. Hierdurch ist eine Montage des Fahrzeugbehelfssitzes am Fahrzeug erleichtert, insbesondere beschleunigt, da keine zusätzliche Montage für ein Gurt-Rückhaltesystem zur Sicherung eines Nutzers notwendig ist.

Außerdem wird vorgeschlagen, dass der Fahrzeugbehelfssitz insbesondere vollständig aus witterungsbeständigen Materialien hergestellt ist. Beispielsweise ist der Rahmen und/oder die Montagemittel aus Metall ausgebildet, z.B. aus Stahl, aus Edelstahl und/oder Aluminium. Beispielsweise ist der Rahmen und/oder die Montagemittel verzinkt vorhanden. Vorteilhafterweise sind die Sitzfläche und die Rückenlehne aus einem witterungsbeständigen Metall, Holz, Kunststoff und/oder Stoff ausgebildet. Beispielsweise weisen die Sitzfläche und/oder die Rückenlehne keine zusätzliche Polsterung auf.

Von Vorteil erweist sich auch, dass der Fahrzeugbehelfssitz derart ausgebildet ist, insbesondere dass die Montageelemente derart ausgebildet sind, dass der Fahrzeugbehelfssitz werkzeuglos an die Sitzunterkonstruktion montierbar und/oder demontierbar ist. Vorteilhafterweise ist der Behelfssitz mit wenigen Handgriffen montierbar. Vorteilhafterweise erfolgt keine Anpassung der Sitzunterkonstruktion für eine Montage des Fahrzeugbehelfssitzes. Der Fahrzeugbehelfssitz ist vorteilhafterweise derart ausgebildet, dass er an bestehenden Sitzunterkonstruktionen anordenbar ist.

Insbesondere ist der Fahrzeugbehelfssitz vergleichsweise leicht ausgebildet, sodass er von einer einzigen Person getragen und/oder montiert werden kann. Das Gewicht des Fahrzeugbehelfssitzes ist beispielsweise in einem Bereich zwischen 1kg und 10kg, zwischen 2kg und 7kg oder zwischen 4kg und 6kg. Das Gewicht des Fahrzeugbehelfssitzes ist z.B. 2kg, 3kg, 3,5kg, 4kg, 4,5kg, 5,5kg, 6kg, 6,5kg, 7kg, 8kg, 9kg oder 10kg, insbesondere 5kg. Vorteilhafterweise besitzt der Fahrzeugbehelfssitz ein Gewicht in einem Bereich um 5kg. Beispielsweise wiegt der Fahrzeugbehelfssitz weniger als 10kg, weniger als 8kg, weniger als 6kg oder weniger als 5kg, insbesondere weniger als 5,5kg.

### Beschreibung eines Ausführungsbeispiels

Ein Ausführungsbeispiel wird anhand der nachstehenden schematischen Zeichnungen unter Angabe weitere Einzelheiten und Vorteile näher erläutert.

Es zeigen:
- Figur 1: eine perspektivische Ansicht von schräg seitlich vorne auf einen erfindungsgemäßen Fahrzeugbehelfssitz im angeordneten Zustand an einer Sitzunterkonstruktion,
- Figur 2: eine perspektivische Ansicht von schräg seitlich hinten auf den Fahrzeugbehelfssitz nach Figur 1,
- Figuren 3 bis 5: in einer seitlichen Ansicht ein Montage- oder Demontagevorgang des Fahrzeugbehelfssitz nach Figur 1 an oder von der Sitzunterkonstruktion.

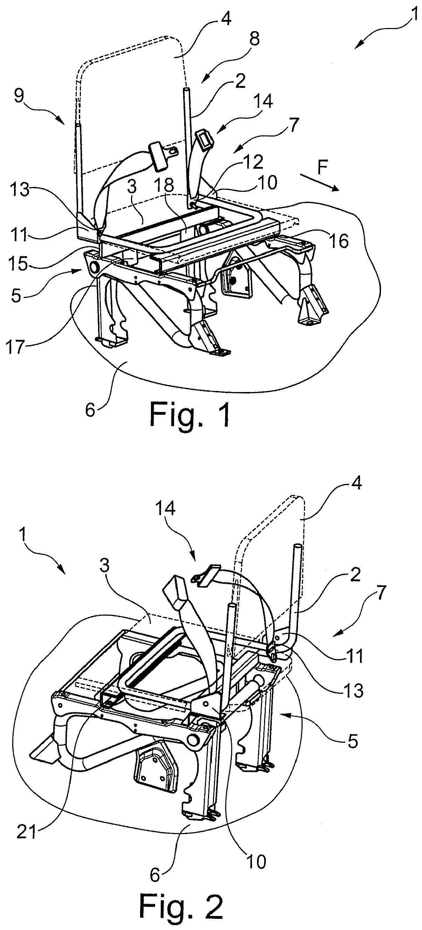

Figuren 1 und 2 zeigen einen erfindungsgemäßen Fahrzeugbehelfssitz 1 mit einem Rahmen 2, einer Sitzfläche 3, einer Rückenlehne 4 und einem Gurt-Rückhaltesystem 5. Aus Gründen der Übersichtlichkeit und zum besseren Verständnis ist in den Figuren 1 und 2 die Sitzfläche 3 und die Rückenlehne 4 transparent dargestellt. Der Fahrzeugbehelfssitz 1 ist an einer Sitzunterkonstruktion 5 befestigbar, welche wiederum auf einem Fahrzeugboden 6 eines Fahrzeugchassis montiert ist.

Vorteilhafterweise ist die Sitzfläche 3 und/oder die Rückenlehne 4 aus einem gewebeartigen Material hergestellt, zum Beispiel aus einem Tuch oder einem Stoff, sodass die Sitzfläche 3 und/oder die Rückenlehne 4 für einen Betrachter zumindest leicht transparent, z.B. gewebeartig transparent vorhanden sein kann.

Der Rahmen 2 ist rohrartig vorhanden und verläuft unterhalb der Sitzfläche 3 z.B. U-förmig. Die Sitzfläche 3 ist mit dem Rahmen 2 vorteilhafterweise fest verbunden, zum Beispiel geschraubt, geklebt und/oder vernietet. Entgegengesetzt zu einer Fahrtrichtung F oder Sitzrichtung F gesehen in einem hinteren Bereich 7 des Fahrzeugbehelfssitzes 1 sind Enden 8, 9 des Rahmens 2 in vertikaler Richtung nach oben, beispielsweise senkrecht zu einer Sitzebene der Sitzfläche 3, verlaufend vorhanden. Beispielsweise sind die Enden 8, 9 nach oben umgebogen. Im Bereich der Richtungsänderung ist der Rahmen 2 beispielsweise mittels eines Stützelementes 10, 11 verstärkt, insbesondere gegenüber einem Abknicken nach vorne. Die Rückenlehne 4 ist an den Enden 8, 9 befestigt.

Außerdem ist im Bereich der Richtungsänderung, z.B. der Abknickungen, am Rahmen 2 ein Anbringelement 12, 13 fixiert, welches dazu ausgestaltet ist, ein Gurt-Rückhaltesystem 14 des Fahrzeugbehelfssitzes 1 zu befestigen. Denkbar ist auch, dass das Anbringelement 12, 13 an dem Stützelement 10, 11 angeordnet ist.

Weiter umfasst der Fahrzeugbehelfssitz 1 Montageelemente 15, 16, welche strebenartig oder balkenartig ausgebildet sind. Die Montageelemente 15, 16 sind in einer Weise an den Rahmen 2 des Fahrzeugbehelfssitz 1 angeordnet, sodass eine Längsachse der Montageelemente 15, 16 zum Beispiel senkrecht zur Sitzrichtung F und/oder parallel zur Sitzebene der Sitzfläche 3 vorhanden ist.

Die Montageelemente 15, 16 umfassen z.B. Montageorgane 17, 18, welche hakenartig ausgebildet sind. Die Montageorgane 17, 18 sind vorteilhafterweise nach unten abstehend an den Montageelementen 15, 16 vorhanden. Beispielsweise sind die Montageorgane 17, 18 derart am Fahrzeugbehelfssitz 1 abstehend angeordnet und ausgebildet, dass ein Einhängen des Fahrzeugbehelfssitzes 1 an der Sitzunterkonstruktion 5 ermöglicht ist. Ein Montageorgan 17, 18 umfasst beispielsweise eine Aufnahmeöffnung 19 zur Aufnahme eines Elements z.B. eines Rundrohrs 20 der Sitzunterkonstruktion 5. Die Aufnahmeöffnung 19 ist beispielsweise in Sitzrichtung F gesehen von hinten oben zugänglich.

Weiter umfassen die Montageelemente 15, 16 beispielsweise Montagemittel 21, 22 durch die der Fahrzeugbehelfssitz 1 an der Sitzunterkonstruktion 6 fixierbar ist. Die Montagemittel 21, 22 sind beispielsweise als Schnellverschlussmittel vorhanden. Vorteilhafterweise sind die Montagemittel 21, 22 in einem vorderen Bereich 23 des Fahrzeugbehelfssitz 1 vorhanden.

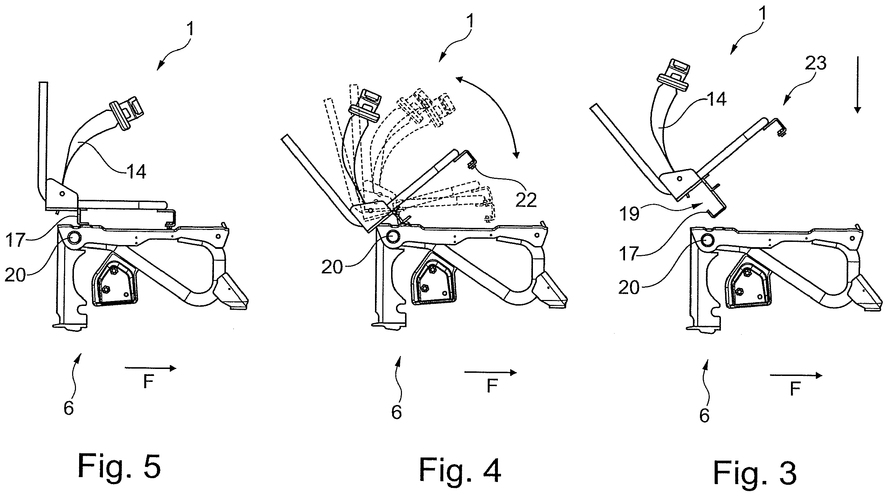

In den Figuren 3 bis 5 ist ein Montage- oder Demontageablauf des Fahrzeugbehelfssitzes 1 an der Sitzunterkonstruktion 6 gezeigt.

Ausgehend von Figur 3, wird der Fahrzeugbehelfssitz 1 bei einer Montage in einer, um eine Querachse des Fahrzeugbehelfssitz 1 gedrehten Stellung von oben an die Sitzunterkonstruktion 6 herangeführt. In einem weiteren Schritt wird der Fahrzeugbehelfssitz 1 entgegen der Sitzrichtung F bewegt, sodass die Montageorgane 17, 18 zum Eingriff an die Sitzunterkonstruktion 6 kommen. Anschließend wird der Fahrzeugbehelfssitz 1 in einer Schwenkbewegung nach vorne unten aufliegend auf die Sitzunterkonstruktion 6 herangeführt (Figur 4) und fixiert (Figur 5). In einer entsprechend umgekehrten Reihenfolge verläuft eine Demontage ausgehend von Figur 5.

### Bezugszeichenliste

- 1: Fahrzeugbehelfssitz
- 2: Rahmen
- 3: Sitzfläche
- 4: Rückenlehne
- 5: Sitzunterkonstruktion
- 6: Fahrzeugchassis
- 7: Bereich
- 8, 9: Ende
- 10, 11: Stützelement
- 12, 13: Anbringelement
- 14: Gurt-Rückhaltesystem
- 15, 16: Montageelement
- 17, 18: Montageorgan
- 19: Aufnahmeöffnung
- 20: Rundrohr
- 21, 22: Montagemittel
- 23: Bereich

## Patentansprüche

1. Fahrzeugbehelfssitz (1) für ein Kraftfahrzeug,
wobei der Fahrzeugbehelfssitz (1) eine Sitzfläche (3) aufweist, wobei der Fahrzeugbehelfssitz (1) Montageelemente (15, 16) aufweist, um den Fahrzeugbehelfssitz (1) an einer Sitzunterkonstruktion (5) anbringen zu können, wobei die Sitzunterkonstruktion (5) zur Anbringung eines herkömmlichen Fahrersitzes des Kraftfahrzeugs vorgesehen ist, und wobei der Fahrzeugbehelfssitz (1) für eine auswechselbare Anbringung an die Sitzunterkonstruktion (5) ausgebildet ist.

2. Fahrzeugbehelfssitz (1) für ein Kraftfahrzeug nach einem der vorangegangenen Ansprüche, **dadurch gekennzeichnet, dass** die Montageelemente (15, 16) für eine lösbare Befestigung des Fahrzeugbehelfssitzes (1) an der Sitzunterkonstruktion (5) ausgebildet sind, wobei die Montageelemente (15, 16) ein Montageorgan (17, 18) zum Einhängen des Fahrzeugbehelfssitzes (1) an die Sitzunterkonstruktion (5) umfassen.

3. Fahrzeugbehelfssitz (1) für ein Kraftfahrzeug nach einem der vorangegangenen Ansprüche, **dadurch gekennzeichnet, dass** das Montageorgan (17, 18) unterhalb der Sitzfläche (3) in einem hinteren Bereich (7) des Fahrzeugbehelfssitzes (1) an einem Rahmen (2) des Fahrzeugbehelfssitzes (1) vorhanden ist, und derart an die Sitzunterkonstruktion (5) anbringbar ausgebildet ist, dass der Fahrzeugbehelfssitz (1) im angehängten Zustand an der Sitzunterkonstruktion (5) im hinteren Bereich (7) des Fahrzeugbehelfssitzes (1) gegen ein Abheben nach oben im Crashfall gehalten ist.

4. Fahrzeugbehelfssitz (1) für ein Kraftfahrzeug nach einem der vorangegangenen Ansprüche, **dadurch gekennzeichnet, dass** eine Rückenlehne (4) vorhanden ist und die Sitzfläche (3) und die Rückenlehne (4) am Rahmen (2) zueinander positionsfest und unlösbar befestigt sind.

5. Fahrzeugbehelfssitz (1) für ein Kraftfahrzeug nach einem der vorangegangenen Ansprüche, **dadurch gekennzeichnet, dass** die Montageelemente (15, 16) Schnellverschlussmittel umfassen, wobei die Schnellverschlussmittel dazu ausgebildet sind, den an der Sitzunterkonstruktion (5) angeordneten Fahrzeugbehelfssitz (1) an der Sitzunterkonstruktion (5) lösbar zu sichern.

6. Fahrzeugbehelfssitz (1) für ein Kraftfahrzeug nach einem der vorangegangenen Ansprüche, **dadurch gekennzeichnet, dass** der Fahrzeugbehelfssitz (1) L-förmig ausgebildet ist.

7. Fahrzeugbehelfssitz (1) für ein Kraftfahrzeug nach einem der vorangegangenen Ansprüche, **dadurch gekennzeichnet, dass** der Fahrzeugbehelfssitz (1) stapelbar ausgebildet ist.

8. Fahrzeugbehelfssitz (1) für ein Kraftfahrzeug nach einem der vorangegangenen Ansprüche, **dadurch gekennzeichnet, dass** der Fahrzeugbehelfssitz (1) ein Gurt-Rückhaltesystem (14) zur Sicherung eines Nutzers aufweist.

9. Fahrzeugbehelfssitz (1) für ein Kraftfahrzeug nach einem der vorangegangenen Ansprüche, **dadurch gekennzeichnet, dass** der Fahrzeugbehelfssitz (1) insbesondere vollständig aus witterungsbeständigen Materialien hergestellt ist.

10. Fahrzeugbehelfssitz (1) für ein Kraftfahrzeug nach einem der vorangegangenen Ansprüche, **dadurch gekennzeichnet, dass** der Fahrzeugbehelfssitz (1) derart ausgebildet ist, insbesondere dass die Montageelemente (15, 16) derart ausgebildet sind, dass der Fahrzeugbehelfssitz (1) werkzeuglos an die Sitzunterkonstruktion (5) montierbar und/oder demontierbar ist.

11. Fahrzeugbehelfssitz (1) für ein Kraftfahrzeug nach einem der vorangegangenen Ansprüche, **dadurch gekennzeichnet, dass** der Fahrzeugbehelfssitz (1) ein Gewicht von weniger als 7kg aufweist.

12. Kraftfahrzeug mit einem Fahrzeugbehelfssitz (1) nach einem der vorangegangenen Ansprüche.
